**Europäisches Patentamt**

**European Patent Office**

**Office européen des brevets**

(19)

(11) Veröffentlichungsnummer : **0 304 412 B1**

(12)
# EUROPÄISCHE PATENTSCHRIFT

(45) Veröffentlichungstag der Patentschrift :
**08.04.92 Patentblatt 92/15**

(51) Int. Cl.$^5$ : **B01D 53/34, F23J 15/00**

(21) Anmeldenummer : **88890189.9**

(22) Anmeldetag : **18.07.88**

(54) **Verfahren zur Behandlung der Verbrennungsrückstände einer Verbrennungsanlage, insbesondere Abfallverbrennungsanlage.**

(30) Priorität : **18.08.87 AT 2079/87**

(43) Veröffentlichungstag der Anmeldung :
**22.02.89 Patentblatt 89/08**

(45) Bekanntmachung des Hinweises auf die
Patenterteilung :
**08.04.92 Patentblatt 92/15**

(84) Benannte Vertragsstaaten :
**BE CH DE FR GB IT LI LU NL SE**

(56) Entgegenhaltungen :
**EP-A- 0 169 997**
**EP-A- 0 243 664**
**EP-A- 0 263 992**
**DE-A- 3 001 258**
**FR-A- 2 176 969**
**FR-A- 2 310 795**

(56) Entgegenhaltungen :
**FR-A- 2 547 210**
**US-A- 3 932 280**
**US-A- 4 164 547**
**US-A- 4 591 490**

(73) Patentinhaber : **SGP-VA Energie- und
Umwelttechnik Gesellschaft m.b.H.
Siemensstrasse 89
A-1210 Wien (AT)**

(72) Erfinder : **Stubenvoll, Josef, Dipl.-Ing.
Laaerstrasse 1
A-2170 Poysdorf (AT)**
Erfinder : **Zechner, Franz, Dipl.-Ing.
Streichergasse 8/12
A-1030 Wien (AT)**

(74) Vertreter : **Köhler-Pavlik, Johann, Dipl.-Ing.
Margaretenplatz 5
A-1050 Wien (AT)**

EP 0 304 412 B1

## Beschreibung

Die Erfindung betrifft ein Verfahren zur Behandlung der Rauchgase und Verbrennungsrückstände einer Verbrennungsanlage, insbesondere Abfallverbrennungsanlage, mit einer Filterung der Flugasche und zumindest einer darauffolgenden zweistufigen Rauchgas-Naßwäsche, unter Ausnutzung der Alkalität der Verbrennungsrückstände für das Auswaschen der sauren Bestandteile der Rauchgase.

Derzeit ist es kein Problem mehr, die Luftemissionen einer Abfallverbrennungsanlage so gering zu halten, daß die Umweltbelastung vernachlässigbar gering ist. Zur Befreiung der Rauchgase von ihren Schadstoffen sind effiziente Rauchgasreinigungsanlagen vorzusehen, die auf drei Basisverfahren beruhen; Naß-,Halbtrocken- und Trockenverfahren. Das Naßverfahren zeichnet sich durch besonders hohe Abreinigungsgrade aus, erfordert aber einen relativ hohen Aufwand an Investition, Energie und Chemikalien.

Durch die US-A- 4 164 547 ist es bekannt, die Alkalität von Flugasche zur Neutralisation von sauren Rauchgasen auszunützen. Hiebei wird Flugasche zusammen mit Kalziumoxid oder Natriumkarbonat der Waschflüssigkeit einer Rauchgasreinigungsanlage zugesetzt, sodaß der Anteil an zugesetzten Chemikalien reduziert werden kann.

In der DE-A- 30 01 258 ist ein Verfahren zum Abbau hoher Fluoridkonzentrationen im Waschwasser von Rauchgasreinigungsanlagen mit Hilfe der Flugasche beschrieben. Dabei wird ein Teilstrom des Waschwasserkreislaufes mit der gröberen Aschefraktion in Kontakt gebracht und danach rückgeleitet. Der entstehende Schlamm ist jedoch sowohl mit den Fluoriden und Chloriden, als auch mit Schwermetallen und ähnlichen Problemstoffen belastet, sodaß er bezüglich der Deponieeigenschaften problematisch ist. Für eine $SO_2$-Abscheidung muß weiterhin zusätzlich Absorptionsmittel, z.B. Kalziumhydroxid, zugegeben werden.

Auch bezüglich der Verbesserung der Deponieeigenschaften sind Bestrebungen vorhanden.

Für die Müllschlacke, d.h. für die auf dem Rost des Kessels verbleibenden Rückstände, wird eine einfache Wäsche zur Entfernung leicht löslicher Anteile als ausreichend erachtet, um sie dann, gegebenenfalls nach weiterer Aufarbeitung wie Siebung etc. in der Bauindustrie weiter verwerten zu können.

Zur Verbesserung der Deponieeigenschaften der Flugasche sind mehrere Verfahren bekannt. Bei einigen davon wird der Flugasche ein Zusatzstoff (z.B. Bamberger Modell, Zusatz von Zement u.ä.) zur Verfestigung beigemengt und durch Abbinden mit Wasser eine Aushärtung des Gemenges und damit auch eine verminderte Auslaugbarkeit erreicht. Ein Nachteil dieser Verfahren (außer beim Bamberger Modell) ist eine Erhöhung des Deponievolumens.

Eine weitere Möglichkeit besteht in der Lagerung in eigenen Behältern. Dies kann jedoch nur als Zwischenlösung betrachtet werden, da auch der beste Behälter nach längerer Zeit durchkorrodiert und die Reaktivität der Flugasche dann noch immer gegeben ist.

Letztlich ist die Behandlung der Flugasche mit einer sauren Lösung bekannt, wodurch leicht eluierbare Elemente wie Cadmium und Zink entfernt werden können.

Die Asche wird danach pelletiert und erneut der Verbrennung zugeführt, wodurch auch organische Stoffe zerstört werden und die Asche ähnliche Eigenschaften wie die Schlacke aufweist.

Aufgabe der Erfindung ist die Schaffung eines Verfahrens der eingangs genannten Art, bei der die Zugabe von Chemikalien zur Naßwäsche auf ein Minimum reduziert werden soll, gleichzeitig die Deponieeigenschaften von Schlacke und Asche zu optimieren und die Möglichkeit zu schaffen, Schwermetalle aus der Asche und der Schlacke in einfacher Weise zu entfernen.

Ein erstes Verfahren der eingangs genannten Art ist erfindungsgemäß dadurch gekennzeichnet, daß die anfallende Asche und/oder Schlacke zumindest einer basischen Wäsche unterzogen wird, wobei das Waschwasser dem Becken der zweiten Rauchgas-Naßwäsche mit einem pH-Wert von 3 bis 8 entnommen wird, wobeinach der Wäsche eine festflüssig Trennung erfolgt und die flüssige Phase mit einem pH-Wert von 5 bis 12 zum Auswaschen der sauren Bestandteile der Rauchgase im Kreislauf der zweiten Rauchgas-Naßwäsche rückgeführt wird.

Eine vorteilhafte Weiterführung der Erfindung ist dadurch gekennzeichnet, daß die anfallende Asche und-/oder Schlacke zusätzlich zumindest einer auf die basische Wäsche folgenden sauren Wäsche unterzogen wird, wobei das Waschwasser für die zweite Waschstufe dem Becken der ersten Rauchgas-Naßwäsche mit einem pH-Wert von 0,5 bis 4 entnommen wird, wobeinach der Wäsche eine fest-flüssig Trennung erfolgt und die flüssige Phase mit einem pH-Wert von 1 bis 8 zum Auswaschen der sauren Bestandteile der Rauchgase im Kreislauf der ersten Rauchgas-Naßwäsche rückgefürt wird.

Durch die Erfindung ergeben sich folgende wesentliche Vorteile:

a) Die Kosten werden verringert, da für die Neutralisation keine (bzw.kaum) zusätzliche Chemikalien notwendig sind.

b) Das Deponieverhalten von Schlacke und Asche wird durch die Auslaugung der leicht löslichen Stoffe verbessert.

c) Das basische Umlaufwasser reagiert mit dem $SO_2$ ohne Feststoffbildung (geringe Übersättigung aufgrund der ständigen Abscheidung bei der Feststoffwäsche).

Weitere Merkmale und Einzelheiten der Erfindung werden nachfolgend anhand der Zeichnung erläutert. Es zeigen

Fig. 1 bis 4 Blockschemata von basischen Wäschen für Asche und Schlacke,

Fig. 5 bis 8 Blockschemata von sauren Wäschen,

Fig. 9 ein Blockschema einer kompletten Anlage mit zwei Rauchgas-Naßwäschen, und

Fig. 10 bis 12 Blockschemata von Wäschen mit einer einzigen Rauchgas-Naßwäsche.

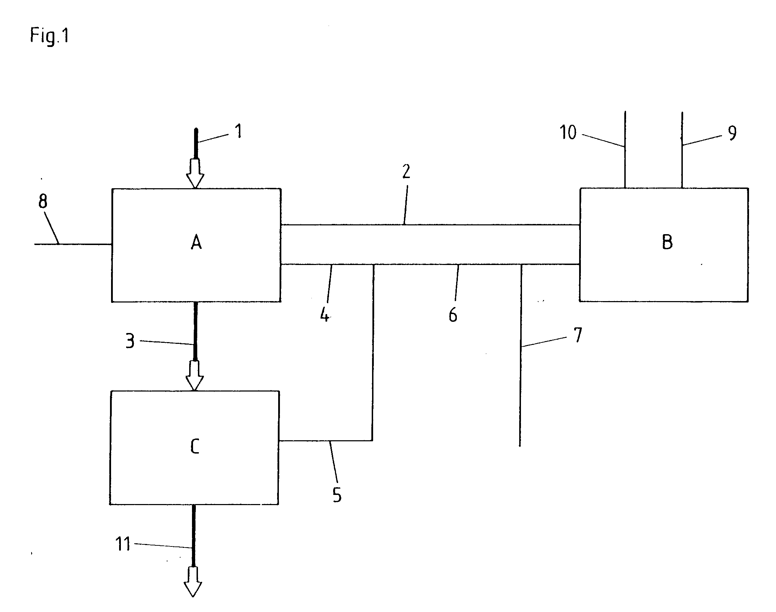

In Fig. 1 ist der einfachste Fall einer basischen Wäsche für Asche und Schlacke in Verbindung mit der zweiten Rauchgas-Naßwäsche einer zweistufigen Rauchgas-Naßwäsche dargestellt. Asche und Schlacke werden als Strom 1 gemeinsam einer ersten Waschstufe A (z.B. Rührbehälter mit oder ohne anschließendes Absetzbecken; modifizierter Naßentschlacker) zugeführt, um dort mit dem Umlaufwasser (Strom 2) vom Becken B der zweiten Rauchgas-Naßwäsche in Kontakt gebracht zu werden. Ein feststoffreicher Teilstrom gelangt als Strom 3 zu einem Entwässerungsaggregat C (z.B. Dekanter, Zentrifuge, Presse, Siebtrommel od.dgl.), um möglichst getrocknet zu werden. Die leicht löslichen Anteile von Asche und Schlacke gehen in der Waschstufe A in Lösung, sodaß die die Waschstufe A und das Entwässerungsaggregat C verlassenden Ströme 4,5 aufgrund des basischen Überschusses basisch werden und für die Abscheidung der sauren Bestandteile der Rauchgase in der zweiten Rauchgas-Naßwäsche verwendet werden können. Zu diesem Zweck werden die beiden Ströme 4,5 vereint und als Strom 6 dem Becken B rückgeführt. Ein Teil des Stroms 6 wird über den Strom 7 abgezweigt und zu einer Abwasseraufbereitung (nicht dargestellt) geführt, um zu verhindern, daß sich Chloride und sonstige leicht lösliche Stoffe im beschriebenen Kreislauf anreichern. Zum Ausgleich der Wasserverluste wird beispielsweise der Waschstufe A Frischwasser über den Strom 8 zugeführt. Die Ströme 9 und 10 bezeichnen die Zu- und Rückleitung des Waschwassers vom Becken B in die zweite Rauchgas-Naßwäsche. Aus dem Entwässerungsaggregat C gelangen die entwässerten Feststoffe als Strom 11 zu einer sauren Waschstufe, wie später beschrieben wird.

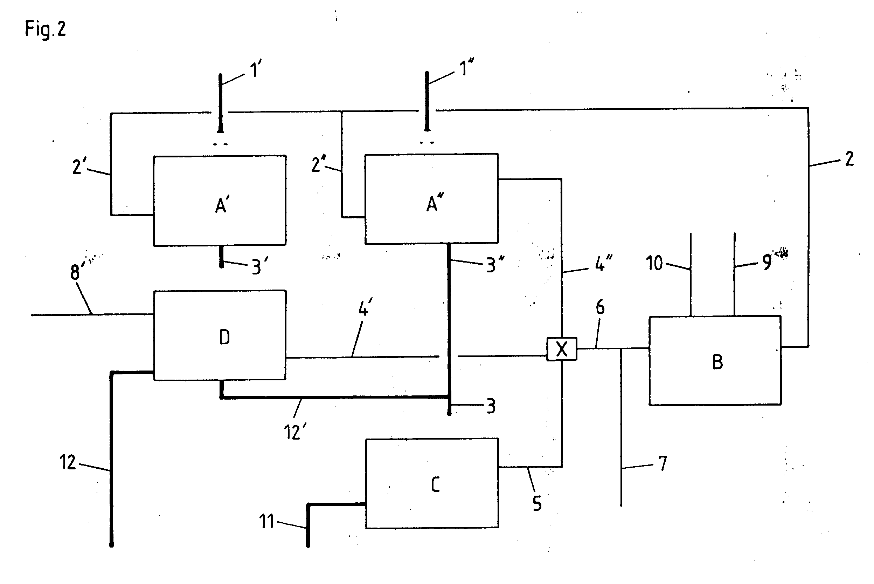

Fig. 2 zeigt zwei getrennte basische Waschstufen für Asche und Schlacke. Die getrennte Wäsche hat den Vorteil, daß der wenig mit Schadstoffen kontaminierte grobe Schlackenanteil nicht in Kontakt mit der stärker kontaminierten Asche kommt. Die Schlacke wird als Strom 1′ der Waschstufe A′ zugeführt, während die Asche als Strom 1″ der Waschstufe A″ zugeführt wird. Das Waschwasser vom Becken B der zweiten Rauchgas-Naßwäsche wird als Strom 2 abgeleitet und in Ströme 2′,2″ aufgeteilt den Waschstufen A′, A″ zugeführt. Die Feststoffe von der Waschstufe A′ gelangen als Strom 3′ zu einem Sieb D, in dem die Trennung der Schlacke nach der Korngröße erfolgt. Die grobe Fraktion wird noch mit Frischwasser über den Strom 8′ nachgewaschen und als Strom 12 abgetrennt, der jedoch nicht in der anschließenden sauren Waschstufe behandelt wird. Die feine Fraktion wird als Strom 12′ mit dem Strom 3″ der Asche zusammengeführt, um als Strom 3 zum Entwässerungsaggregat C geleitet zu werden. Aus dem Entwässerungsaggregat C gelangen wieder die entwässerten Feststoffe als Strom 11 zur sauren Waschstufe. Die basischen Waschwässer von der Waschstufe A″, vom Sieb D, und vom Entwässerungsaggregat C gelangen als Ströme 4″,4′ und 5 zu einem Sammelbehälter X und von dort als Strom 6 zum Becken B. Es wäre auch eine getrennte Zuführung der basischen Ströme 4′,4″ und 5 zum Becken B möglich. Die Ströme 7,9 und 10 haben die gleiche Funktion wie beim Beispiel nach Fig. 1.

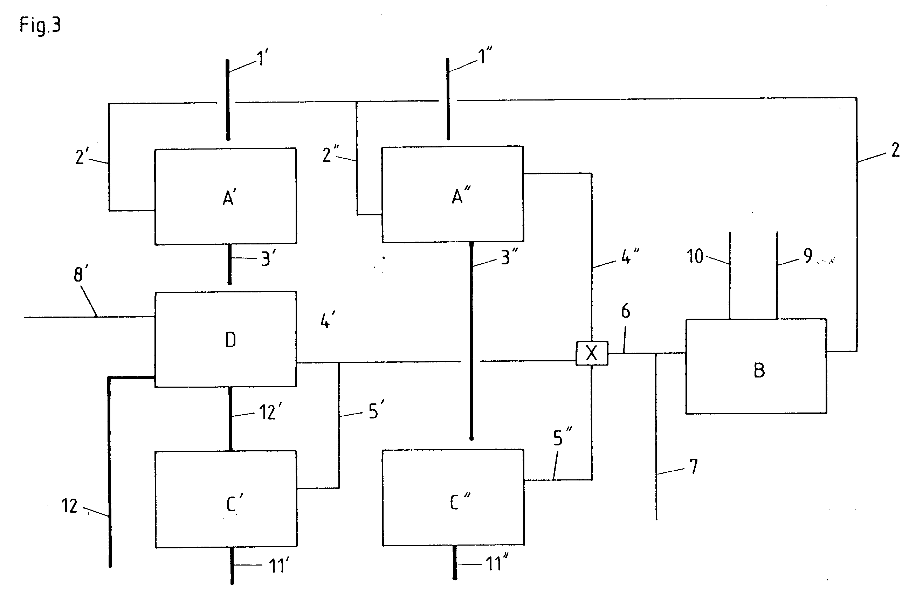

Fig. 3 zeigt einen ähnlichen Aufbau wie Fig. 2, jedoch mit der Möglichkeit einer getrennten Entwässerung von Schlacke und Asche in zwei Entwässerungsaggregaten C′ und C″. Der basische Strom 4′ aus dem Sieb D wird mit dem basischen Strom 5′ aus dem Entwässerungsaggregat C′ vereint und zum Sammelbehälter X geleitet, dem auch die basischen Ströme 5″ und 4″ zugeleitet werden. Die Feststoffe von Schlacke und Asche stehen als Ströme 11′bzw. 11″ getrennt zur Verfügung, um in getrennten sauren Waschstufen weiter behandelt zu werden, wie später beschrieben wird.

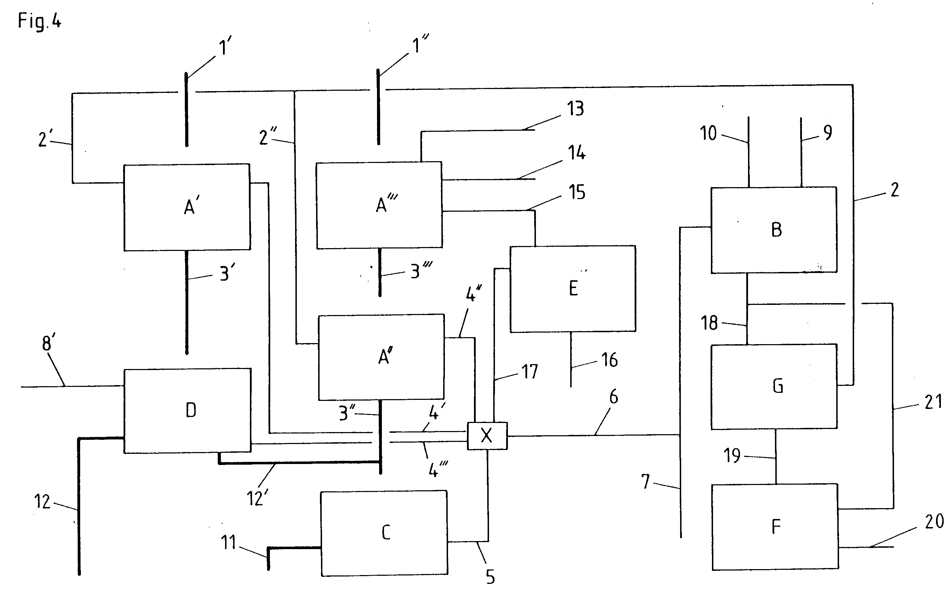

Fig. 4 zeigt mehrere Erweiterungsmöglichkeiten des in Fig. 2 dargestellten Beispiels, wobei jede Erweiterung mit Ausnahme der Gipsstufe, unabhängig von anderen angewendet werden kann:

1. Ein zusätzlicher Strom 4′ wird von der Waschstufe A′ abgeleitet und dem Sammelbehälter X zugeführt, wobei eine zusätzliche Absetzmöglichkeit in der Waschstufe A′ für die Schlacke nach dem Kontakt mit dem Umlaufwasser geschaffen und damit das Sieb D als Trennstufe entlastet wird.

2. Vor der Waschstufe A″ ist eine weitere Waschstufe A‴ vorgesehen, der die Asche über den Strom 1″ zugeführt wird. Zusätzlich wird Wasser als Strom 13 und Natronlauge als Strom 14 zugeführt, um einen so hohen pH-Wert zu erreichen, daß Schwermetalle als Komplexionen in Lösung gehen, die danach von der wässrigen Lösung abgetrennt werden. Dazu wird die Waschlauge als Strom 15 einer Schwermetallabtrennstufe, z.B. einem Ionentauscher E zugeführt und dort von Schwermetallen gereinigt, sodaß ein schwermetallreicher Strom 16 aus dem Kreislauf ausgeschleust und ein schwermetallarmer Strom 17 dem Sammelbehälter X zusammen mit den anderen basischen Strömen 4′,4″, 4‴ und 5 zugeführt werden kann.

3. Eine Umkehrosmosestufe G ist nötig, wenn eine separate Gipsabscheidung stattfinden soll, oder wenn aufgrund der hohen Ionenkonzentration das Auslaugen von Schlacke und Asche schlecht funktioniert. Der Eingangsstrom 18 wird dabei in einen Reinstrom 2, der wieder in die basische Wäschen eingesetzt wird, und in einen stark beladenen Strom 19 aufgeteilt, der entweder als Eingangsstrom für die Gipsabscheidestufe F dient oder aber der Abwasseraufbereitung zugeführt wird (dafür entfällt Strom 7).

4. Wie bei herkömmlichen Rauchgasentschwefelungsanlagen ist eine Gipsabscheidung möglich. Das Waschwasser wird vom Becken B als Strom 18 der Umkehrosmosestufe G und von dieser in aufkonzentrierter Form als Strom 19 der Gipsabscheidestufe F (nur als Block dargestellt) geführt. Dort wird es in einem Hydrozyklon von den groben Gipskristallen befreit, die dann über Eindicker und Vakuumfilter gewonnen und als Strom 20 ausgetragen werden. Das von den groben Gipskristallen gereinigte Wasser wird wieder als Strom 21 dem Strom 18 vor der Umkehrosmosestufe G zugesetzt. Bei dieser Variante wird das Umlaufwasser für die Waschstufen A′ und A″ als Strom 2 der Umkehrosmosestufe G entnommen.

Falls keine Gipsabscheidestufe F vorgesehen ist, wird aufgrund der pH-Wert-Verschiebung,der erhöhten Ca-Ionenkonzentration und der großen vorhandenen Feststoffoberfläche der Gips an Asche und Schlacke abgelagert.

Wenn zu wenig basische Stoffe für die Abscheidung herausgelöst werden, können zusätzliche alkalische Chemikalien dem Becken zugeführt werden (nicht dargestellt). Dies gilt für alle vier beschriebenen Fälle.

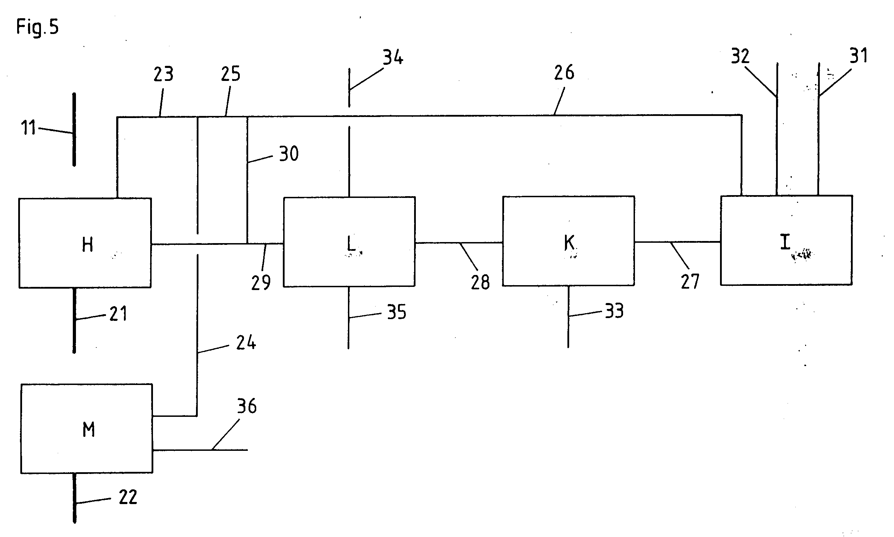

Vor der Beschreibung der in Fig. 5 bis 8 gezeigten sauren Waschstufen wird zunächst die Aufgabe und die Funktionsweise der einzelnen Blöcke erläutert:

Blöcke H, H′, H″:

In diesen erfolgt die eigentliche saure Wäsche der Feststoffe, indem letztere mit dem sauren Waschwasser vermischt werden, lösliche Stoffe (vor allem Alkali- und Erdalkalimetallionen) an das Waschwasser abgegeben und danach wieder von diesem abgetrennt werden.Damit können zwei Aufgabenstellungen erfüllt werden:

Durch das in Lösung Gehen der basischen Stoffe wird erstens eine Übersäuerung des Waschwasserkreislaufes verhindert und zweitens gehen die Schwermetalle, mobilisiert durch den niedrigen pH-Wert in das Waschwasser über und können in einer eigenen Stufe abgeschieden werden, wodurch die Verbesserung der übrigen Reststoffe gewährleistet ist. Im einfachsten Fall kann eine derartige Stufe als Rührbehälter mit nachgeschaltetem Absetzbecken ausgeführt sein. Falls die sauren Bestandteile der Rauchgase nicht für die Erzielung eines niedrigen ph-Wertes ausreichen, der für die Eluierbarkeit der Schwermetalle notwendig ist, können zusätzliche saure Chemikalien zugesetzt werden (nicht dargestellt).

Block I:

Dieser ist das Becken der ersten Rauchgas-Naßwäsche, die vor allem zur HCl-Abscheidung dient, sodaß das eingesetzte Waschwasser (Strom 31) nur einen geringen pH-Wert aufweisen muß, um abscheidewirksam zu sein. Das Waschwasser reinigt nicht nur die Rauchgase sondern dient auch zu deren Kühlung, sodaß die Menge des ins Becken zurückfließenden Waschwassers (Strom 32) durch Verdampfung geringer wird, und daher mehr Waschwasser vom sauren Waschwasserkreislauf zugeführt wird (Strom 26 u.40) als wieder in den Kreislauf zurückgeht (Strom 27).

Block K:

Dieser ist eine Quecksilber-Abscheidestufe. In der ersten Naßwäsche wird neben HCl (und schwermetallbeladenem Flugstaub) auch der größte Teil an Quecksilber abgeschieden, welches vor dem Kontakt mit den Feststoffen abgeschieden werden muß, da es sonst an diesen adsorbiert wird. Zu diesem Zweck wird der aus dem Becken I austretende Strom 27 im Abscheider K einer spezifischen Fällung (z.B. mit TMT15) unterworfen, oder über spezifische Quecksilberionentauscher geleitet, sodaß das den Abscheider K verlassende Waschwasser (Strom 28) weitestgehend quecksilberfrei ist und dafür ein quecksilberreicher Strom 33 anfällt, aus dem das Quecksilber gegebenenfalls rückgewonnen werden kann.

Block L:

Dieser ist eine spezifische Schwermetall-Abscheidestufe. Zur Entfernung der in Lösung befindlichen Schwermetalle soll eine möglichst spezifische Methode angewandt werden, um die Rückgewinnung ökonomisch zu gestalten oder um einen möglichst kleinen Anfall an Sondermüll zu erhalten. Als Methoden bieten sich dafür an:

a) spezifische Extraktion mittels einer organischen Phase und Reextraktion mit Säure. Die konzentrierte saure Metallösung (Strom 35) wird weiterverarbeitet oder neutralisiert, wobei die Metalle gefällt werden.

b) Spezifische Extraktion mittels einer organischen Phase und stufenweise Reextraktion mit Säure, sodaß mehr saure Lösungen mit unterschiedlichen Zusammensetzungen gewonnen werden können (als ein Strom 35 dargestellt).

c) Spezifische Extraktion mittels einer organischen Phase, und Reextraktion mit konzentrierter Lauge. Im Strom 35 fällt ein Metallhydroxidschlamm an.

d) Flüssigmembranpermeation: Extraktion und Reextraktion finden in einem Behälter statt (drei Phasen bilden eine multiple Emulsion, wobei die mittlere, organische Phase als Membran dient). Es fällt eine konzentrierte saure Metallösung als Strom 35 an.

e) Spezifische Ionentauschharze: Als Strom 35 fallen die Ionentauscher mit den eingebundenen Metallen an.

Für die Methoden a) bis d) ist jeweils eine Vorreinigung (damit keine Feststoffe die organische Phase verschmutzen) und eine Nachreinigung (Befreiung von organischen Stoffen) des Waschwassers notwendig.

Blöcke M,M',M":

In diesen erfolgt die erforderliche Nachwäsche, die zur Befreiung der Feststoffe von den Chloriden dient, welche mit dem Restwasser von der sauren Waschstufe H mitgeschleppt werden. Das eingesetzte Frischwasser (Strom 36) wird auch zur Deckung der Verluste des Kreislaufsystems verwendet, die durch die Ausschleusung zur Abwasseraufbereitung (zur Verhinderung der Anreicherung an löslichen Stoffen (Strom 34)) und durch die Wasserverdampfung bei der Kühlung der Rauchgase entstehen.

Block N:

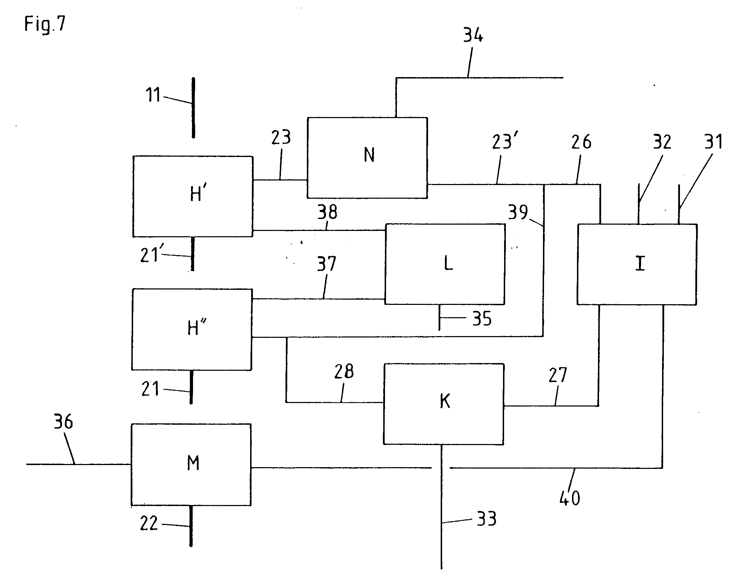

Dieser ist eine Umkehrosmosestufe, die dann eingesetzt wird, wenn durch hohe Salzkonzentrationen die normale Funktion des Kreislaufs beeinträchtigt wird. Die Umkehrosmosestufe N wird im Beispiel nach Fig. 7 verwendet, doch kann sie prinzipiell auch bei den anderen dargestellten Beispielen eingesetzt werden.

Der Einsatz des in Fig. 5 gezeigten Beispiels einer sauren Wäsche in Verbindung mit der ersten sauren Rauchgas-Naßwäsche einer zweistufigen Rauchgas-Naßwäsche ist dann zweckmäßig, wenn nur eine geringe Reinigung der aus der basischen Waschstufe (Fig. 1 bis 4) kommenden Feststoffe (Strom 11) erforderlich ist und/oder die Schwermetallkonzentration im Becken I der ersten Rauchgas-Naßwäsche hoch ist.

Der aus der sauren Waschstufe H austretende Strom 21 tritt in die Nachwaschstufe M ein und verläßt diese gereinigt als Strom 22. Der aus der Waschstufe H austretende Strom 23 und der aus der Nachwaschstufe M austretende Strom 24 werden zu einem Strom 25 vereint, der nur zum kleineren Teil als Strom 26 über das Becken I der ersten Rauchgas-Naßwäsche und in der Folge über die Quecksilber-Abscheidestufe K (Strom 27) und die Schwermetall-Abscheidestufe L (Strom 28) zur Waschstufe H (Strom 29) rückgeführt wird, während der größere Teil (Strom 30) der Waschstufe H direkt rückgeführt wird. Die Ströme 31 und 32 bezeichnen die Zu- und Rückleitung des Waschwassers vom Becken I zur ersten Rauchgas-Naßwäsche. Aus der Quecksilber-Abscheidestufe K wird der quecksilberreiche Strom 33 abgeleitet, und aus der Schwermetall-Abscheidestufe L wird das Abwasser als Strom 34 zu einer Abwasseraufbereitungsanlage geleitet, während die Schwermetallösung bzw. der Schwermetallschlamm als Strom 35 abgeleitet wird. Der Nachwaschstufe M wird über den Strom 36 Frischwasser zugeführt. Vorteilhaft für dieses Beispiel sind die kleinen Umlaufmengen in den Strömen 26,27 und 28, die eine kleinere Dimensionierung der Stufen K und L ermöglichen.

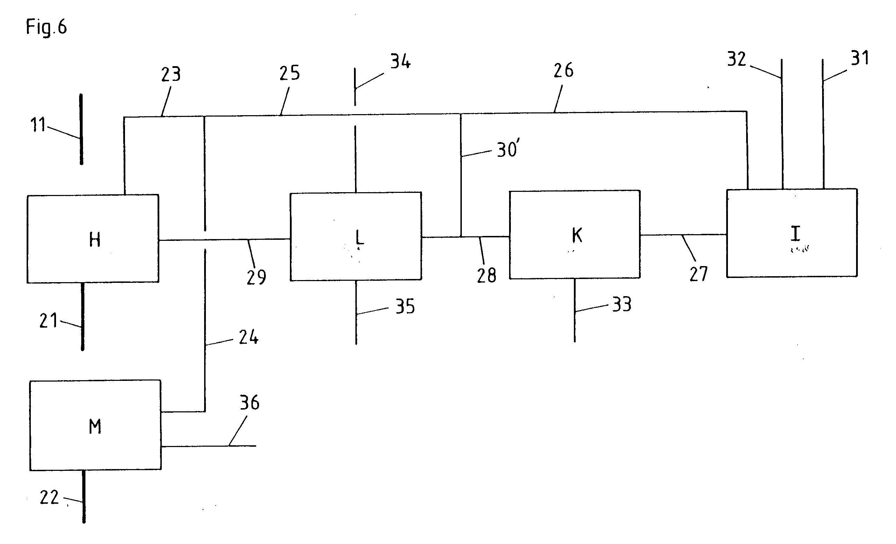

Das in Fig. 6 gezeigte Beispiel unterscheidet sich von dem in Fig. 5 gezeigten nur darin, daß der größere Teil (Strom 30') des Stromes 25 über die Schwermetall-Abscheidestufe L der Waschstufe H rückgeführt wird, wodurch ein höherer Abreinigungsgrad erzielt werden kann.

Fig. 7 zeigt ein Beispiel einer zweistufigen sauren Wäsche, bei der die Feststoffe von einer ersten Waschstufe H' über einen Strom 21' zu einer zweiten Waschstufe H" im Gegenstrom zum Waschwasser geführt werden, welches von der zweiten Waschstufe H" (Strom 37) über die Schwermetall-Abscheidestufe L (Strom 38) zur ersten Waschstufe H' geleitet wird. Dabei wird in der ersten Waschstufe H' schon ein großer Teil der basischen Stoffe ausgewaschen, sodaß dann in der zweiten Waschstufe H" ein niedriger pH-Wert herrscht, wodurch mehr Schwermetalle in Lösung gebracht werden können, die dann im Schwermetall-Abscheider L abgeschieden werden. Zwischen der ersten Waschstufe H' (Strom 23) und dem Becken I ist zusätzlich eine Umkehrosmosestufe N (Ströme 23',34) angeordnet, die Störungen durch zu hohe Salzkonzentrationen im Kreislauf verhindern soll und vor allem dann notwendig ist, wenn abwasserfrei gearbeitet werden soll. Das von der Umkehrosmosestufe N abgeleitete Abwasser (Strom 34) wird dann einer Abwasserbehandlung zugeführt oder eingedampft. Um die Dimensionen der Quecksilber-Abscheidestufe K klein zu halten, wird der größere Teil des Stromes 23' als Strom 39 abgezweigt und der zweiten Waschstufe H" rückgeführt. Das in der Nachwaschstufe M anfallende Wasser wird als Strom 40 dem Becken I zugeführt. Die übrigen Ströme (11,21,22,27,28,31 bis 36) entsprechen in ihrer Funktion den gleichzahligen in Fig. 5.

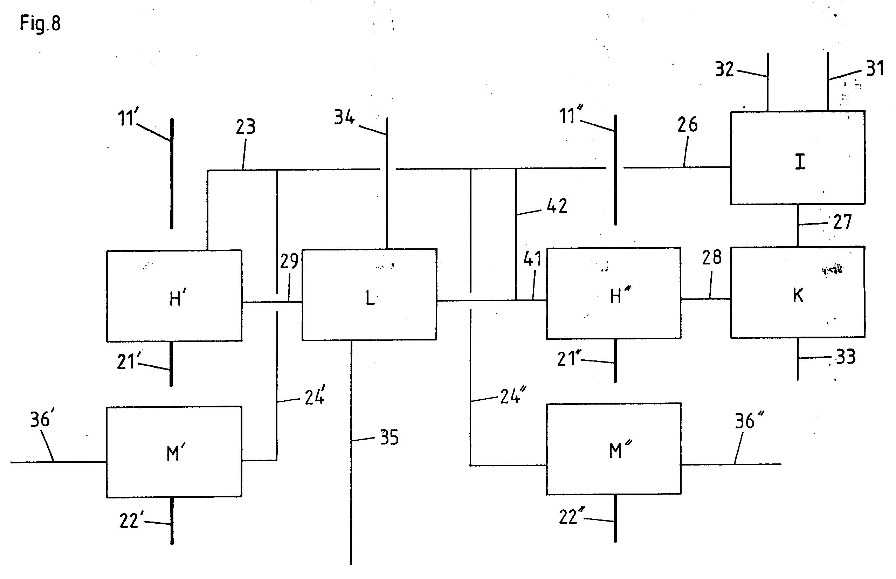

Das Beispiel nach Fig. 8 zeigt die Möglichkeit der getrennten sauren Behandlung von Asche und Schlacke, wobei die vorangehende basische Behandlung ebenfalls getrennt erfolgt (siehe Fig. 3). Die Schlacke, (Strom 11′) und die Asche (Strom 11″) werden in ersten und zweiten Waschstufen H′ bzw. H″ von ihren löslichen Anteilen befreit und in den Nachwaschstufen M′ bzw. M″ (Ströme 21′,21″) nachgewaschen. Durch die Kreislaufführung des Waschwassers - vom Becken I (Strom 27) über die Quecksilber-Abscheidestufe K (Strom 28) zur zweiten Waschstufe H″ der Asche und erst dann über einen Strom 41 zur Schwermetall-Abscheidestufe L, von dort über den Strom 29 zur ersten Waschstufe H′ der Schlacke und von dort (Strom 23,26) zurück ins Becken I - wird gewährleistet, daß die stärker kontaminierte Asche mit der stärker sauren Lösung behandelt wird und deshalb eine bessere Auslaugung erfährt. Der größere Teil des Stromes 23 aus der ersten Waschstufe H′ wird abgezweigt und als Strom 42 dem Strom 41 beigemengt, wodurch die Dimensionierung der Quecksilber-Abscheidestufe K verringert werden kann. Will man auch die Dimensionen der Schwermetall-Abscheidestufe verringern und die Konzentrationen erhöhen, muß Strom 42 dem Strom 29 beigemengt werden (nicht dargestellt).

Den Nachwaschstufen M′M″ werden Frischwasserströme 36′,36″ zugeführt, die anschließend als Ströme 24′,24″ dem Strom 23 beigemengt werden. Die Feststoffe verlassen gereinigt die Nachwaschstufen M′, M″ als Ströme 22′, 22″. Die Ströme 31 bis 35 sind ident mit den in Fig. 6 und 7 gezeigten Strömen 31 bis 35.

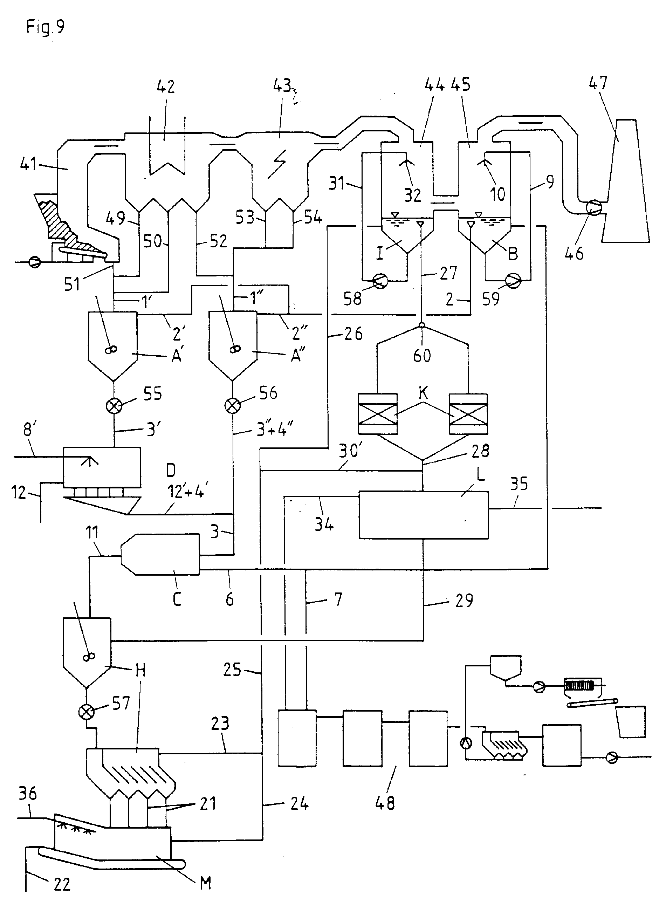

Fig. 9 zeigt die wesentlichen Baueinheiten einer Abfallverbrennungsanlage mit Rauchgasreinigung mit einem Ofen 41, einem Abhitzekessel 42, einem Elektrofilter 43, eine erste Rauchgas-Naßwaschanlage 44 für HCl und HF, einer zweiten Rauchgas-Naßwaschanlage 45 für $SO_2$, einem Gebläse 46 und einem Kamin 47. Die basische Waschstufe entspricht dem Beispiel nach Fig. 2 (jedoch ohne eigene Ströme 4′,4″, die gemeinsam mit den Strömen 3″,12′ der Feststoffe zur Entwässerungsstufe C gehen) und die saure Waschstufe entspricht dem Beispiel nach Fig. 6, wobei die gleichen Bezugszeichen wie in diesen Figuren verwendet werden, sodaß bezüglich der Betriebsweise auf die Beschreibung der Fig. 2 und 6 verwiesen werden darf. Eine Abwasseraufbereitungsanlage ist mit 48 bezeichnet, die jedoch nicht näher erläutert wird, da sie nicht direkt zum Gebiet der Erfindung gehört.

Da die nach dem Eintritt der Rauchgase in den Abhitzekessel 42 anfallende Asche (Ströme 49,50) noch relativ schwermetallarm ist, kann sie der Schlacke (Strom 51) aus dem Ofen 41 zugegeben werden, um den Strom 1′ zu bilden. Die vor dem Austritt der Rauchgase aus dem Abhitzekessel 42 anfallende Asche (Strom 52) wird mit der im Elektrofilter 43 anfallenden Asche (Strom 53,54) zum Strom 1″ vereint.

Die Austragung der Feststoffe aus den Waschstufen A′,A″ und H erfolgt über Zellradschleusen 55,56 und 57. Die Pumpen für den internen Kreislauf in den Rauchgas- Naßwäschen 44 und 45 sind mit 58 und 59 bezeichnet.

Die Quecksilber-Abscheidestufe K ist in diesem Fall redundant ausgeführt, wobei abwechselnd eine Stufe in Betrieb ist, während die andere regeneriert wird. Zu diesem Zweck ist im Strom 27 ein Umschaltventil 60 vorgesehen.

Bisher wurde davon ausgegangen, daß bei einer zweistufigen Rauchgas-Naßwäsche sowohl das saure als auch das basische Waschwasser für die Feststoffwäschen verwendet wurden. Es besteht aber auch die Möglichkeit, daß nur das Waschwasser einer Stufe einer zweistufigen Rauchgas-Naßwäsche verwendet wird, wenn auf einen der angeführten Vorteile (z.B. keine Auslaugung der Schwermetalle bei rein basischer Wäsche) verzichtet werden kann, oder wenn die basischen Anteile der Feststoffe nur zum Auswaschen der in einer Rauchgas-Naßwaschstufe anfallenden sauren Rauchgasbestandteile ausreichen.

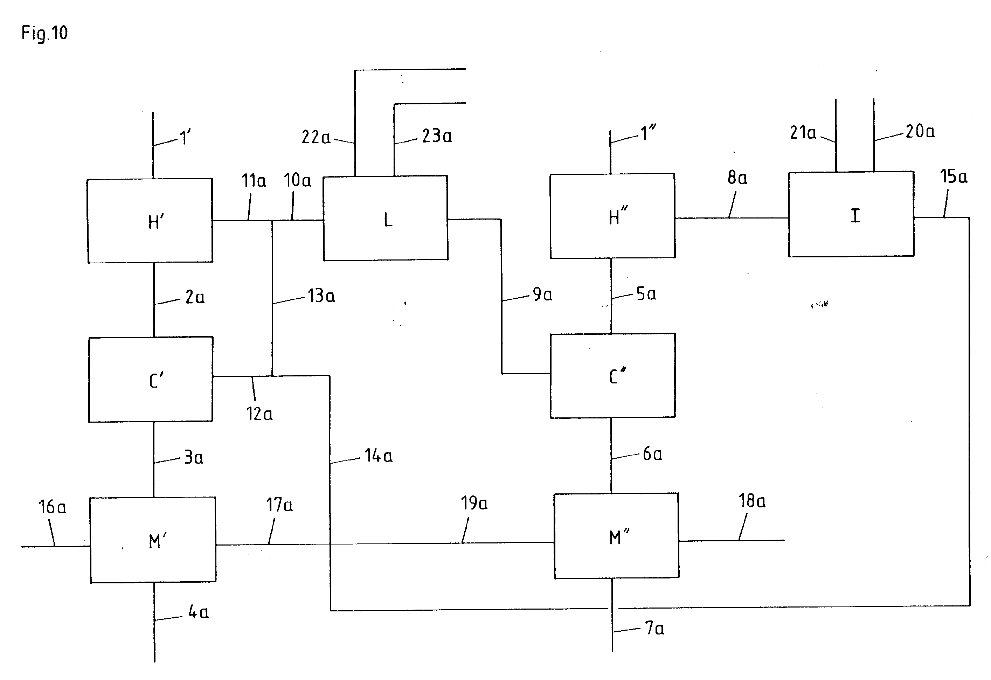

Die folgenden drei Beispiele nach Fig. 10 bis 12 zeigen den Einsatz des erfindungsgemäßen Verfahrens für eine einstufige Rauchgas-Naßwäsche.

Wenn die $SO_2$-Abscheidung vernachlässigt werden kann, so können die Beispiele mit den sauren Waschstufen gemäß Fig. 5 bis 8 angewandt werden. Zu beachten ist dabei allerdings, daß mehr basische Stoffe in den Kreislauf eingesetzt werden und die Kontaktzeiten daher kürzer gehalten werden müssen.

Ein weiterer Vorteil des Verfahrens besteht darin, daß der bei der Abwasseraufbereitung anfallende Neutralisationsschlamm wieder der Verbrennung zugeführt werden kann, ohne daß es zu einer Anreicherung von Schwermetallen kommt.

Fig. 10 zeigt die getrennte Wäsche von Schlacke (Strom 1′) und Asche (Strom 1″).

Die Schlacke wird in der sauren Waschstufe H′ mit dem Umlaufwasser (Strom 11a) vermischt, wobei basische Stoffe in Lösung gegen und gelangt dann zusammen mit dem Wasser (Strom 2a) zu einer Entwässerungsstufe C′ (Absetzbecken, Schrägklärer, Filter od.dgl.), wo eine Eindickung stattfindet. Die eingedickte Suspension (Strom 3a) wird in einer Nachwäsche M′ (z.B. Siebtrommel, besprühter Förderer) noch nachgewaschen, und die nasse Schlacke (Strom 4a) verläßt weitgehend inert die Nachbehandlung. In analoger Weise wird die Asche (Strom 1″) in den Blöcken H″,C″ und M″ (Ströme 1″,5a,6a und 7a) behandelt. Zusätzlich erfolgt eine gezielte Behandlung der Asche, indem das vom Becken I der ersten Rauchgas-Naßwäsche kommende saure Waschwasser (Strom 8a) direkt mit der Asche kontaktiert wird, sodaß eine besonders gute Schwermetallextraktion der Asche erfolgt.

Der die Entwässerungsstufe C″ verlassende Strom 9a wird zur Schwermetall-Abscheidestufe L (Permeationsstufe, Extraktionsstufe, Ionentauscher) geführt, wo die Schwermetalle über den Strom 23a entfernt werden. Gleichzeitig wird ein Strom 22a zur Abwasseraufbereitung ausgeschleust, um eine Anreicherung von löslichen Stoffen im Kreislauf zu verhindern. Zweischen der Waschstufe H′ und der Entwässerungsstufe C′ wird ein Strom 13a im Kreislauf geführt, damit die Dimensionen der übrigen Apparate verringert werden können. Die Frischwasserströme 16a und 18a dienen nicht nur zur Chloridauswaschung, sondern auch zur Deckung der Verluste, die durch den Ausschleusstrom 22a und die zur Kühlung der heißen Rauchgase verdampfte Wassermenge (Wassermengendifferenz zwischen Zu (Strom 20a)-und Rücklauf (Strom 21a) vom Becken I in die erste Rauchgas-Naßwäsche) entstehen. Die aus der Entwässerungsstufe C′ und den beiden Nachwäschen M′ und M″ austretenden Ströme 14a, 17a und 19a werden als Strom 15a dem Becken I rückgeführt.

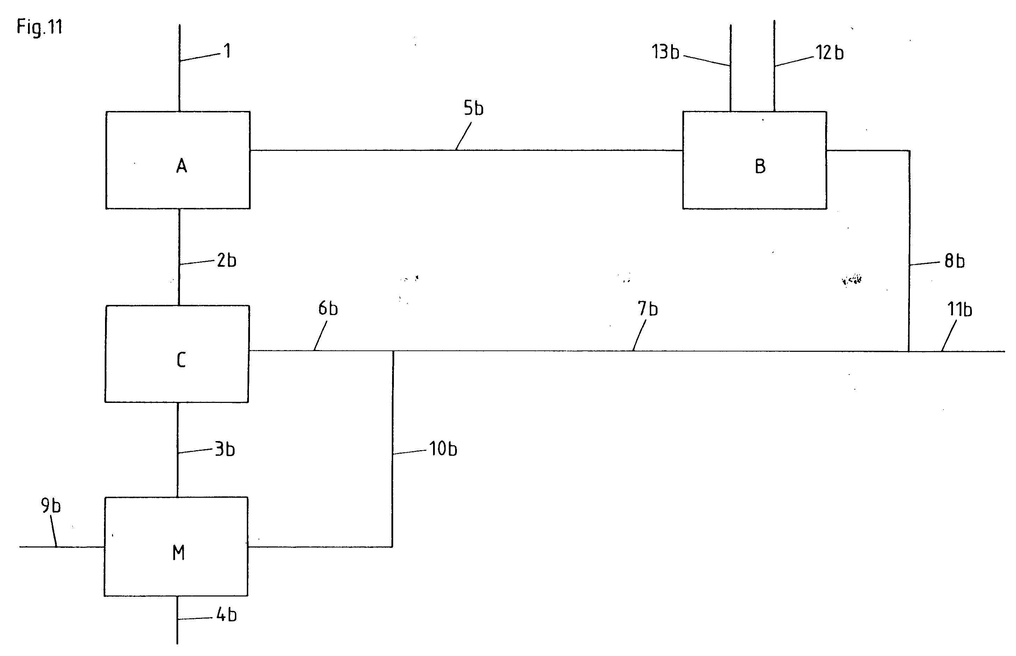

Das Beispiel nach Fig. 11 eignet sich dann, wenn auch eine größere Menge an $SO_2$ abgeschieden werden soll, wobei Schlacke und Asche (Strom 1) gemeinsam behandelt werden. Der erforderliche höhere pH-Wert kann durch Erhöhung der Verweilzeit in der Waschstufe A und durch Vergrößerung der Umlaufmenge des Umlaufwassers erzielt werden. Die Feststoffe gelangen von der Waschstufe A über den Strom 2b zur Entwässerungsstufe C und von dieser über den Strom 3b zur Nachwäsche M, die sie als Strom 4b verlassen. Das vom Becken B kommende Wasser (Strom 5b) wird über die Stufen A und C geführt und verläßt letztere als Strom 6b, der mit dem Strom 10b aus der Entwässerungsstufe M zu einem Strom 7b vereint wird und unter Verminderung des Ausschleusstroms 11b als Strom 8b dem Becken B rückgeführt wird. Die Frischwasserzufuhr (Strom 9b) dient wieder zur Deckung der Verluste durch Ausschleusung und Verdampfung bei der Rauchgaskühlung. Die Ströme 12b und 13b bezeichnen die Zu- und Rückleitung des Waschwassers vom Becken B in die Rauchgas-Naßwäsche. Der Einsatz einer Schwermetall-Abscheidestufe erscheint bei diesem Beispiel aufgrund der durch die hohen Umlaufmengen niedrigen Schwermetallkonzentrationen nicht sinnvoll.

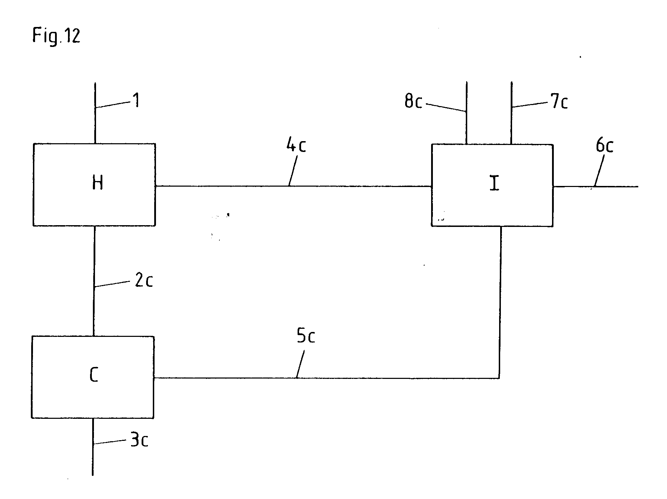

Das Beispiel nach Fig. 12 eignet sich für den Fall, daß keine besondere Anforderungen an die Feststoffe hinsichtlich Qualität gestellt werden, und daß nur eine geringe $SO_2$-Reduktion erforderlich ist. Hier kann das Verfahren praktisch abwasserfrei betrieben werden, indem die löslichen Salze mit der Feuchte der Feststoffe ausgetragen werden.

Schlacke und Asche (Strom 1) werden über eine Waschstufe H und eine Entwässerungsstufe C (Ströme 2c,3c) geführt. Die Entwässerung sollte nicht zu stark sein (Feuchtegehalt ca. 50 - 90% bezogen auf die Gesamtmenge), sodaß genügend salzbeladenes Wasser mitausgetragen wird. Als Entwässerung bietet sich dabei besonders ein zweistufiges System an, bei der in der ersten Stufe eingedickt wird (Siebtrommel, Lamellenschrägklärer, Absetzbecken) und die eingedickte Suspension dann in Behälter oder Säcke, die auch als Einwegbehälter oder -säcke ausgeführt sein können, abgefüllt wird, in denen das Wasser solange verdunsten kann, bis die Feststoffe soweit entwässert sind, daß sie auf die Deponie verbracht werden können. Da die Feststoffe durch die Wäsche keine Verbesserung erfahren, ist dieses Beispiel für Anlagen denkbar, die nur einen geringen Reststoffanfall haben, der auf eine gesonderte Deponie verbracht werden muß (z.B. Asche und Schlacke von Spitalmüll).

Das Umlaufwasser fließt vom Becken I zur Waschstufe H (Strom 4c) und von dieser gemeinsam mit den Feststoffen zur Entwässerungsstufe C (Strom 2c) und kehrt von dieser zum Becken I zurück (Strom 5c), während die Feststoffe über den Strom 3c ausgetragen werden. Die Ströme 7c und 8c bezeichnen die Zu- und Rückleitung des Waschwassers vom Becken I in die Rauchgas-Naßwäsche. Verluste durch die Wasserverdampfung zur Rauchgaskühlung und durch die ausgetragene Feststoffeuchte werden durch den Frischwasserstrom 6c ausgeglichen.

Bei den Beispielen nach Fig. 10 bis 12 kann auch zusätzlich eine Quecksilberabscheidung (z.B. Ionentauscher) nach dem Becken des Rauchgaswäschers vorgesehen sein, falls eine Beladung der Feststoffe mit Hg unerwünscht ist, oder es muß rauchgasseitig eine entsprechende Einrichtung (Aktivkohlefilter) vorgesehen werden.

Allen Beispielen nach Fig. 10 bis 12 ist die Einsparung von basischem Material zur Neutralisation gemeinsam, wodurch sich der Aufwand für den Betrieb verringert.

Beim Beispiel nach Fig. 10 ergeben sich zusätzliche Vorteile, wie: Verbesserung des größten Teils der anfallenden Reststoffe, Verringerung der Reststoffmenge, Recycling der Schwermetalle durch Konzentration eher möglich.

Beim Beispiel nach Fig. 11 ergibt sich der zusätzliche Vorteil einer Abscheidung von HCl und $SO_2$ ohne besonders großen apparativen Aufwand.

Beim Beispiel nach Fig. 12 ergibt sich ein einfacher Aufbau und ein abwasserloser Prozeß.

In den dargestellten Beispielen wurden die jeweils günstigsten Stellen für die Entnahme der Ausschleus-

EP 0 304 412 B1

ströme gezeigt; diese kann prinzipiell an einer beliebigten Stelle des Kreislaufs erfolgen.

Die Rückströme ins Becken müssen nicht zu einem Strom vereinigt, sondern können auch getrennt oder teilweise (beliebig kombiniert) vereinigt rückgeführt werden.

**Patentansprüche**

1. Verfahren zur Behandlung der Rauchgase und Verbrennungsrückstände einer Verbrennungsanlage, insbesondere Abfallverbrennungsanlage, mit einer Filterung der Flugasche und zumindest einer darauffolgenden zweistufigen Rauchgas-Naßwäsche, unter Ausnutzung der Alkalität der Verbrennungsrückstände für das Auswaschen der sauren Bestandteile der Rauchgase, dadurch gekennzeichnet, daß die anfallende Asche und-/oder Schlacke zumindest einer basischen Wäsche unterzogen wird, wobei das Waschwasser dem Becken der zweiten Rauchgas-Naßwäsche mit einem pH-Wert von 3 bis 8 entnommen wird, wobeinach der Wäsche eine festflüssig Trennung erfolgt und die flüssige Phase mit einem pH-Wert von 5 bis 12 zum Auswaschen der sauren Bestandteile der Rauchgase im Kreislauf der zweiten Rauchgas-Naßwäsche rückgeführt wird.

2. Verfahren nach Anspruch 1, dadurch gekennzeichnet, daß die anfallende Asche und/oder Schlacke zusätzlich zumindest einer auf die basische Wäsche folgenden sauren Wäsche unterzogen wird, wobei das Waschwasser für die zweite Waschstufe dem Becken der ersten Rauchgas-Naßwäsche mit einem pH-Wert von 0,5 bis 4 entnommen wird, wobeinach der Wäsche eine fest-flüssig Trennung erfolgt und nur die flüssige Phase mit einem pH-Wert von 1 bis 8 zum Auswaschen der sauren Bestandteile der Rauchgase im Kreislauf der ersten Rauchgas-Naßwäsche rückgeführt wird.

3. Verfahren nach Anspruch 1 oder 2, dadurch gekennzeichnet, daß eine Anreicherung von Salzen durch Ausschleusströme verhindert wird.

4. Verfahren nach Anspruch 1 oder 2, dadurch gekennzeichnet, daß ein Teil der im Waschwasser-Kreislauf gelösten Schwermetalle durch Extraktionsverfahren und/oder Permeationsverfahren und/oder schwermetallspezifischer Ionentauscher und/oder schwermetallspezifischer Fällungsmittel entfernt wird.

5. Verfahren nach Anspruch 4, dadurch gekennzeichnet, daß die im Waschwasser-Kreislauf gelösten Schwermetalle in mehreren Stufen abgeschi eden werden.

6. Verfahren nach Anspruch 4, dadurch gekennzeichnet, daß die Schwermetalle aus dem Waschwasserstrom, der dem Becken einer Rauchgas-Naffwäsche entnommen und der Feststoffwäsche zugeführt wird, abgeschieden werden.

7. Verfahren nach Anspruch 5, dadurch gekennzeichnet, daß ein Teil der Schwermetalle, insbesondere Quecksilber aus dem Waschwasserstrom, der dem Becken einer Rauchgas-Naßwäsche entnommen und der Feststoffwäsche zugeführt wird, abgeschieden und die übrigen aus dem Waschwasserstrom, der von der ersten Schwermetallabscheidung zur sauren Wäsche und/oder von der sauren Wäsche zur Rauchgasnaßwäsche und/oder zwischen zwei sauren Wäschen geführt wird, abgeschieden werden.

8. Verfahren nach Anspruch 1 oder 2, dadurch gekennzeichnet, daß die aufgrund des hohen pH-Werts komplex gebundenen Schwermetalle mittels schwermetallspezifischem Ionentauscher und/oder durch Extraktionsverfahren und/oder Permeationsverfahren und/oder schwermetallspezifischer Fällungsmittel aus dem Waschwasserstrom, der der basischen Wäsche entnommen wird, abgeschieden werden.

9. Verfahren nach Anspruch 1 oder 2, dadurch gekennzeichnet, daß die Feststoffe nach der Wäsche entwässert werden.

10. Verfahren nach Anspruch 9, dadurch gekennzeichnet, daß die Feststoffe nach der Entwässerung nachgewaschen werden.

11. Verfahren nach Anspruch 1 oder 2, dadurch gekennzeichnet, daß die Schlacke und Asche gemeinsam der (den) Wäsche(n) zugeführt werden.

12. Verfahren nach Anspruch 2, dadurch gekennzeichnet, daß die Schlacke und/oder Asche mindestens einer Wäsche getrennt der (den) Wäsche(n) zugeführt werden.

13. Verfahren nach Anspruch 2, dadurch gekennzeichnet, daß ein Teil der Schlacke gemeinsam mit der Asche mindestens einer sauren Wäsche zu geführt wird.

14. Verfahren nach Anspruch 1 oder 2, dadurch gekennzeichnet, daß die sich im Waschwasser-Kreislauf anreichernden Salze durch Umkehrosmose aufkonzentriert und ausgeschleust werden.

15. Verfahren nach Anspruch 1 oder 2, dadurch gekennzeichnet, daß der beladene Strom der Umkehrosmose als Einsatzstrom für eine Gipsabscheidestufe verwendet wird.

16. Verfahren nach Anspruch 1 oder 2, dadurch gekennzeichnet, daß bei zu wenig Kapazität des Waschwassers an basischen Stoffen, insbesondere zur Schwermetallabscheidung bei hohem pH-Wert, zusätzliche basische Stoffe dem Kreis auf zugeführt werden.

17. Verfahren nach Anspruch 2, dadurch gekennzeichnet, daß zusätzlich Säure der sauren Wäsche zuge-

8

führt wird.

18. Verfahren nach Anspruch 2, dadurch gekennzeichnet, daß bei einer mehrstufigen Wäsche das Waschwasser im Gegenstrom zum Feststoffstrom geführt wird.

19. Verfahren nach Anspruch 2, dadurch gekennzeichnet, daß ein Teil des aus der sauren Wäsche austretenden Waschwassers dem Eingang der Wäsche rückgeführt wird.

20. Verfahren nach Anspruch 1 oder 2, dadurch gekennzeichnet, daß ein Teil des Waschwassers am Becken der Rauchgas-Naßwäsche vorbeigeführt wird.

21. Verfahren nach Anspruch 1 oder 2, dadurch gekennzeichnet, daß ein Teil des Waschwassers am Becken der Rauchgas-Naßwäsche und an einer Schwermetallabscheidung vorbei geführt wird.

## Claims

1. A process for the treatment of the flue gases and combustion residues of an incineration plant, in particular a waste-incineration plant, with filtration of the flue ash and at least one subsequent two-stage flue-gas wet wash, while making use of the alkalinity of the combustion residues for washing out the acid constituents of the flue gases, **characterized in that** the ash and/or slag formed is subjected to at least one basic wash, the washing water being removed from the basin of the second flue-gas wet wash with a pH value of from 3 to 8, a solid/liquid separation taking place after the wash and the liquid phase with a pH value of from 5 to 12 being fed back in the circuit to the second flue-gas wet wash for washing out the acid constituents of the flue gases.

2. A process according to Claim 1, **characterized in that** the ash and/or slag formed is additionally subjected to at least one acid wash following the basic wash, the washing water for the second washing stage being removed from the basin of the first flue-gas wet wash with a pH value of from 0-5 to 4, a solid/liquid separation taking place after the wash and only the liquid phase with a pH value of from 1 to 8 being fed back in the circuit to the first flue-gas wet wash for washing out the acid constituents of the flue gases.

3. A process according to Claim 1 or 2, **characterized in that** an enrichment of salts is prevented by discharge flows.

4. A process according to Claim 1 or 2, **characterized in that** part of the heavy metals dissolved in the washing-water circuit are removed by extraction processes and/or permeation processes and/or ion exchangers specific to heavy metals and/or precipitating agents specific to heavy metals.

5. A process according to Claim 4, **characterized in that** the heavy metals dissolved in the washing-water circuit are separated in a plurality of stages.

6. A process according to Claim 4, **characterized in that** the heavy metals are separated from the washing-water flow which is removed from the basin of a flue-gas wet wash and is conveyed to the solids wash.

7. A process according to Claim 5, **characterized in that** part of the heavy metals, in particular mercury, are separated from the washing-water flow, which is removed from the basin of a flue-gas wet wash and conveyed to the solids wash, and the remainder are separated from the washing-water flow which is conveyed from the first heavy-metal separation to the acid wash and/or from the acid wash to the flue-gas wet wash and/or between two acid washes.

8. A process according to claim 1 or 2, **characterized in that** the heavy metals bonded in a complex manner on account of the high pH value are separated from the washing-water flow - which is removed from the basic wash - by means of ion exchangers specific to heavy metals and/or by extract ion processes and/or permeation processes and/or precipitating agents specific to heavy metals.

9. A process according to Claim 1 or 2, **characterized in that** the solids are dehydrated after the wash.

10. A process according to Claim 9, **characterized in that** the solids are subsequently washed after the dehydration.

11. A process according to Claim 1 or 2, **characterized in that** the slag and ash are conveyed jointly to the wash or washes.

12. A process according to Claim 2, **characterized in that** the slag and/or ash from at least one wash are conveyed separately to the wash or washes.

13. A process according to Claim 2, **characterized in that** part of the slag is conveyed jointly with the ash to at least one acid wash.

14. A process according to Claim 1 or 2, **characterized in that** the salts which are enriched in the washing-water circuit are concentrated by reverse osmosis and discharged.

15. A process according to Claim 1 or 2, **characterized in that** the loaded flow of reverse osmosis is used as a charge flow for a gypsum-separation stage.

16. A process according to Claim 1 or 2, **characterized in that** in the case of insufficient capacity of the wash water in basic substances, in particular for heavy-metal separation at a high pH value, additional basic substances are conveyed to the circuit.

17. A process according to Claim 2, **characterized in that** acid is additionally supplied to the acid wash.

18. A process according to Claim 2, **characterized in that** in the case of a multiple stage wash the washing water is conveyed in counterflow to the solids flow.

19. A process according to Claim 2, **characterized in that** parts of the washing water issuing from the acid wash is fed back to the inlet of the wash.

20. A process according to Claim 1 or 2, **characterized in that** part of the washing water is fed past the basin of the flue-gas wet wash.

21. A process according to Claim 1 or 2, **characterized in that** part of the washing water is fed past the basin of the flue-gas wet wash and past a heavy-metal discharge.

## Revendications

1. Procédé de traitement des fumées et des résidus de combustion d'un incinérateur, en particulier d'un incinérateur de déchets, comportant un filtrage des cendres volantes et au moins, à la suite, un lavage par voie humide des fumées en deux étapes, par exploitation du caractère alcalin des résidus de combustion pour la lixiviation des constituants acides des fumées, caractérisé en ce que les cendres et/ou les scories formées sont soumises au moins à un lavage basique, l'eau de lavage étant prélevée du bassin du deuxième lavage par voie humide des fumées à un pH de 3 à 8, après le lavage une séparation matières solides-liquides étant effectuée et la phase liquide d'un pH compris entre 5 et 12 étant renvoyée dans le circuit du deuxième lavage de fumées, pour la lixiviation des constituants acides des fumées.

2. Procédé selon la revendication 1, caractérisé en ce que les cendres et/ou les scories formées sont soumises en plus à au moins un lavage acide faisant suite au lavage basique, l'eau de lavage étant prélevée, pour la deuxième étape de lavage, du bassin du premier lavage par voie humide des fumées, à un pH compris entre 0,5 et 4, une séparation en matières solides-liquides étant effectuée après le lavage et la phase liquide d'un pH compris entre 1 et 8 étant renvoyée dans le circuit du premier lavage par voie humide des fumées, pour la lixiviation des constituants acides des fumées.

3. Procédé selon la revendication 1 ou 2, caractérisé en ce qu'on empêche un enrichissement des sels par des courants d'éclusage.

4. Procédé selon la revendication 1 ou 2, caractérisé en ce qu'une partie des métaux lourds dissous dans le circuit d'eau de lavage est éliminée par procédé d'extraction et/ou procédé de perméation et/ou échangeur d'ions spécifique des métaux lourds et/ou agent de précipitation spécifique des métaux lourds.

5. Procédé selon la revendication 4, caractérisé en ce que les métaux lourds dissous dans le circuit d'eau de lavage sont séparés en plusieurs étapes.

6. Procédé selon la revendication 4, caractérisé que en ce que les métaux lourds sont séparés du courant d'eau de lavage qui est prélevé du bassin d'un lavage par voie humide des fumées et envoyés au lavage des matières solides.

7. Procédé selon la revendication 5, caractérisé en ce qu'une partie des métaux lourds, en particulier le mercure, est séparée du courant d'eau de lavage qui est prélevé du bassin d'un lavage par voie humide des fumées et envoyée au lavage des matières solides et en ce que les autres sont séparés du courant d'eau de lavage qui est envoyé de la première séparation des métaux lourds au lavage acide et/ou du lavage acide au lavage par voie humide des fumées et/ou entre deux lavages acides.

8. Procédé selon la revendication 1 ou 2, caractérisé en ce que les métaux lourds liés en un complexe de pH élevé sont séparés au moyen d'échangeurs d'ions spécifiques des métaux lourds et/ou par procédé d'extraction et/ou par procédé de perméation et/ou par un agent de précipitation spécifique des métaux lourds, du courant d'eau de lavage qui est prélevé du lavage basique.

9. Procédé selon la revendication 1 ou 2, caractérisé en ce que les matières solides sont déshydratées après le lavage.

10. Procédé selon la revendication 9, caractérisé en ce que les matières solides sont relavées après la déshydratation.

11. Procédé selon la revendication 1 ou 2, caractérisé en ce que les scories et cendres sont envoyées conjointement au(x) lavage(s).

12. Procédé selon la revendication 2, caractérisé en ce que les scories et/ou cendres d'au moins un lavage sont envoyées séparément au(x) lavage(s).

13. Procédé selon la revendication 2, caractérisé en ce qu'une partie des scories est envoyée, conjointement avec les cendres, vers au moins un lavage acide.

14. Procédé selon la revendication 1 ou 2, caractérisé en ce que les sels s'enrichissant dans le circuit d'eau de lavage sont concentrés par osmose inverse et éclusés.

15. Procédé selon la revendication 1 ou 2, caractérisé en ce que le courant chargé de l'osmose inverse est utilisé comme courant pour une étape de séparation de gypse.

16. Procédé selon la revendication 1 ou 2, caractérisé en ce que dans le cas où la capacité de l'eau de lavage en substances basiques est trop faible, notamment pour la séparation des métaux lourds de pH élevé, on envoie dans le circuit des substances basiques supplémentaires.

17. Procédé selon la revendication 2, caractérisé en ce qu'on envoie de l'acide complémentaire au lavage acide.

18. Procédé selon la revendication 2, caractérisé en ce que dans le cas d'un lavage en plusieurs étapes l'eau de lavage est envoyée dans le sens contraire au courant des matières solides.

19. Procédé selon la revendication 2, caractérisé qu'une partie de l'eau de lavage sortant du lavage acide est renvoyée à l'entrée du lavage.

20. Procédé selon la revendication 1 ou 2, caractérisé en ce qu'une partie de l'eau de lavage passe devant le bassin de lavage par voie humide des fumées.

21. Procédé selon la revendication 1 ou 2, caractérisé en ce qu'une partie de l'eau de lavage passe devant le bassin de lavage par voie humide des fumées ainsi que devant une séparation des métaux lourds.

Fig.1

Fig.2

Fig.3

Fig. 4

Fig.5

EP 0 304 412 B1

Fig.6

EP 0 304 412 B1

Fig.7

Fig.8

Fig.9

Fig.10

EP 0 304 412 B1

Fig.11

EP 0 304 412 B1

Fig.12

EP 0 304 412 B1